# FASCICULE DE BREVET EUROPEEN

(11) **EP 0 616 451 B1**
(45) Date de publication et mention de la délivrance du brevet: **15.09.1999**
(21) Numéro de dépôt: 94400197.3
(22) Date de dépôt: 31.01.1994
(51) Int. Cl.: H04L 12/28

(54) **Procédé et installation d'attribution d'adresse de sous-réseau**
Verfahren und Vorrichtung zur Adressenzuweisung in einem Unternetz
Method and device for address allocation in a sub-network

(30) Priorité: 18.02.1993 FR 9301839
(43) Date de publication de la demande: 21.09.1994
(73) Titulaire: EURO CP s.a.r.l., 94300 Vincennes (FR)
(72) Inventeur: Gilbert, Jérôme, F-92300 Levallois Perret (FR)
(74) Mandataire: Pontet, Bernard

(56) Documents cités:
- EP-A- 0 466 152
- FR-A- 2 660 781
- IEEE TRANSACTIONS ON CONSUMER ELECTRONICS, vol.34, no.3, Août 1988, NEW YORK US pages 694 - 699, XP3865 J.A.TRITTON 'INTERACTIVE HOME SYSTEMS (IHS) - AN OVERVIEW'
- IEEE TRANSACTIONS ON CONSUMER ELECTRONICS, vol.37, no.2, Mai 1991, NEW YORK US pages 135 - 143, XP234470 P.J.HARGADEN ET AL 'FUNCTIONS AND OPERATIONS OF CEBUS ROUTERS'

## Description

La présente invention concerne des procédés, relevant d'un même concept inventif, pour adresser en sous-réseau des unités fonctionnelles communiquant entre elles par un réseau filaire.

La présente invention concerne encore une installation pour la mise en oeuvre de ce procédé.

La présente invention concerne également un dispositif de déclaration d'isolement, combiné le cas échéant avec un filtre, ainsi qu'une unité fonctionnelle convenables, pour la mise en oeuvre de ce procédé ou pour faire partie de l'installation.

L'invention s'applique aux installations domestiques et aux installations en locaux professionels.

Dans de telles installations, on sait organiser les unités fonctionnelles en les reliant entre elles par un réseau filaire de manière à offrir à l'utilisateur des possibilités de pilotage plus perfectionné, plus automatique ou plus commode.

L'invention est mise en oeuvre avec des unités fonctionnelles, par exemple des appareils ou des fonctions d'appareils, qui ont la possibilité de communiquer de manière bidirectionnelle à travers un réseau, par exemple à travers le réseau de distribution électrique en faisant appel à la technique des courants porteurs, ou encore à travers un câble, des fibres optiques, etc ... Les unités fonctionnelles peuvent être non seulement des appareils, mais aussi des fonctions ou ressources d'appareil, ou encore un organe assurant une fonction de relais vers un appareil éloigné du local.

La structure de réseau la mieux adaptée pour mettre en oeuvre ce procédé est une structure multi-maître multi-esclave avec échange possible des rôles. Le mode d'accès au support de transmission sera avantageusement du type à accès multiple avec écoute préalable du support et gestion des collisions.

Ce type d'installations comporte des phases opératoires de configuration partielle ou totale au cours desquelles des adresses sont attribuées aux unités fonctionnelles.

On sait d'après le FR-A-2670590 attribuer à chaque unité fonctionnelle non seulement une adresse d'unité, mais aussi une adresse de maison, ou plus généralement de sous-réseau, grâce à laquelle cette unité fonctionnelle ne pourra communiquer qu'avec d'autres unités fonctionnelles ayant la même adresse de sous-réseau. Ceci permet par exemple de réaliser par voie logicielle plusieurs sous-réseaux indépendants dans un même local, même si ces sous-réseaux sont matériellement reliés entre eux. Mais cette attribution d'adresses de sous-réseau nécessite, pour chaque unité fonctionnelle, au moins une opération supplémentaire de la part de l'installateur. Or, dans un grand nombre de cas, les adresses de sous-réseaux sont inutiles. D'une part on ne souhaite pas toujours fractionner une installation donnée en plusieurs sous-réseaux. D'autre part, on protège souvent l'installation par un filtre empêchant l'installation de perturber et d'être perturbée par des communications en provenance des installations voisines. En effet, malgré les adresses de sous-réseaux, certaines perturbations entre installations sont à craindre, notamment par les communications nécessaires pour configurer les installations.

Le but de l'invention est de simplifier l'intervention de l'installateur lors des procédures d'adressage dans le cas d'un sous-réseau protégé du reste du réseau, sans pour autant renoncer à la possibilité de créer, par voie d'adressage, des sous-réseaux ne nécessitant pas d'être protégés physiquement les uns par rapport aux autres.

Suivant l'invention, le procédé pour attribuer au moins une adresse de sous-réseau dans une installation d'unités fonctionnelles communiquant entre elles par un réseau filaire, ces unités fonctionnelles étant conçues pour être affectées d'une adresse de sous-réseau permettant de définir dans le réseau des sous-réseaux reliant entre elles des unités fonctionnelles capables, d'après les adresses de sous-réseau, d'ignorer les communications provenant d'unités fonctionnelles rattachées à d'autres sous-réseaux, est caractérisé en ce qu'on isole une partie du réseau de manière à empêcher le passage des communications entre cette partie du réseau et toute autre partie du réseau, en ce qu'on provoque dans la partie de réseau l'émission d'un message de déclaration d'isolement et en ce que les unités fonctionnelles reliées à la partie de réseau tiennent compte du message de déclaration d'isolement pour adopter un adressage de sous-réseau prédéterminé.

Lorsque les unités fonctionnelles reçoivent le message de déclaration d'isolement, elles adoptent une adresse de sous-réseau prédéterminée sans que l'installateur ait à intervenir. Comme elles adoptent toutes cette adresse de sous-réseau, elles pourront toutes communiquer entre elles. Et peu importe si cette adresse de sous-réseau est déjà utilisée dans un autre sous-réseau puisqu'on sait que la partie de réseau considérée est isolée des autres. On a donc constitué un sous-réseau avec la partie de réseau sans avoir les soucis d'installation correspondants.

L'isolement du sous-réseau peut être dû à l'interposition d'un dispositif d'isolement tel qu'un filtre au point de jonction entre le sous-réseau et le reste du réseau. Cette solution s'applique lorsque le réseau est constitué par le réseau de distribution électrique. Mais l'isolement du sous-réseau peut aussi résulter du fait que le sous-réseau est constitué par l'ensemble du réseau, lorsque le réseau est par exemple constitué par un câble dédié monté dans un local d'habitation et non relié à d'autres locaux devant être pilotés de manière indépendante.

Suivant un autre aspect de l'invention, le procédé pour attribuer une adresse de sous-réseau à une unité fonctionnelle communiquant avec d'autres unités fonctionnelles par un réseau filaire, cette unité fonctionnelle étant conçue pour être affectée d'une adresse de sous-réseau permettant de définir, dans le réseau, des sous-réseaux reliant entre elles des unités fonctionnelles capables, d'après les adresses de sous-réseau, d'ignorer les communications provenant d'unités fonctionnelles rattachées à d'autres sous-réseaux, est caractérisé par les étapes suivantes :
- attente par l'unité fonctionnelle d'un message de déclaration d'isolement en provenance du réseau ;
- si une partie de réseau à laquelle est reliée l'unité fonctionnelle est physiquement isolée du reste du réseau à l'égard des communications entre unités fonctionnelles, émission d'un message de déclaration d'isolement à travers la partie de réseau;
- en l'absence de message de déclaration d'isolement, détermination de l'adresse de sous-réseau à attribuer à l'unité fonctionnelle, pour que cette adresse soit cohérente avec celle desdites autres unités fonctionnelles ;
- en présence d'un message de déclaration d'isolement, adoption par l'unité fonctionnelle d'une adresse de sous-réseau prédéterminée.

Cet aspect de l'invention montre comment une unité fonctionnelle peut soit bénéficier de la procédure d'adressage simplifié lorsque le sous-réseau est isolé, soit faire l'objet d'une procédure d'attribution d'une adresse de sous-réseau convenable, choisie par exemple pour être distincte de celles des autres sous-réseaux lorsque le sous-réseau est relié au reste du réseau.

Suivant un troisième aspect de l'invention, l'installation pour la mise en oeuvre d'un procédé selon l'un des deux premiers aspects, comprenant des unités fonctionnelles susceptibles de communiquer entre elles via un réseau filaire et organisables en sous-réseaux au moyen d'une adresse de sous-réseau affectée à chaque unité fonctionnelle, est caractérisé en ce que l'installation comprend un dispositif de déclaration d'isolement relié au réseau et programmé pour délivrer aux unités fonctionnelles, via le réseau, un message de déclaration d'isolement selon lequel ces unités fonctionnelles appartiennent à un sous-réseau qui est physiquement isolé du reste du réseau, et en ce que les unités fonctionnelles sont programmées pour tenir compte de ce message en adoptant systématiquement une adresse de sous-réseau prédéterminée.

Le dispositif de déclaration d'isolement peut-être un composant très économique que l'on relie à un sous-réseau lorsque l'on sait qu'il est isolé. Le simple montage du dispositif de déclaration d'isolement décharge ensuite l'installateur de toutes les opérations d'adressage de sous-réseau.

Suivant son quatrième aspect, l'invention concerne également le dispositif de déclaration d'isolement pour la mise en oeuvre du procédé ou pour faire partie de l'installation.

Suivant un cinquième aspect, le dispositif de filtrage et déclaration d'isolement est caractérisé en ce qu'il comprend, matériellement assemblés, un filtre conçu pour isoler l'une de l'autre deux entrées de ce filtre à l'égard de signaux de communication, et un dispositif de déclaration d'isolement selon l'aspect précédant, raccordé à l'une des entrées de ce filtre.

En couplant en un même ensemble le filtre et le dispositif de déclaration, on simplifie le montage, et on s'assure que l'installateur bénéficiera des avantages de l'invention dès lors qu'il isolera physiquement le sous-réseau du reste du réseau.

Suivant un sixième aspect de l'invention, l'unité fonctionnelle pour la mise en oeuvre du procédé ou pour faire partie de l'installation est caractérisée en ce qu'elle est programmée pour attendre un message de déclaration d'isolement, pour adopter l'adresse prédéterminée en cas de réception d'un tel message, et le cas échéant pour engager une procédure de détermination de l'adresse de sous-réseau à affecter à l'unité fonctionnelle dans le cas contraire.

D'autres particularités et avantages de l'invention ressortiront encore de la description ci-après, relative à des exemples non limitatifs.

Aux dessins annexés :
- la figure 1 est une vue schématique d'une installation selon l'invention ;
- la figure 2 est un schéma-bloc d'une unité fonctionnelle selon l'invention ;
- la figure 3 est un schéma-bloc d'un dispositif de déclaration d'isolement selon l'invention ;
- la figure 4 est un organigramme d'adressage, selon lequel est programmé le micro-contrôleur d'une unité fonctionnelle de commande ;
- la figure 5 est un organigramme selon lequel est programmé le micro-contrôleur du dispositif de déclaration d'isolement ;
- la figure 6 illustre l'organigramme de l'unité fonctionnelle selon un deuxième mode de réalisation ; et
- la figure 7 représente l'organigramme d'un dispositif de déclaration d'isolement compatible avec l'unité fonctionnelle de la figure 6.

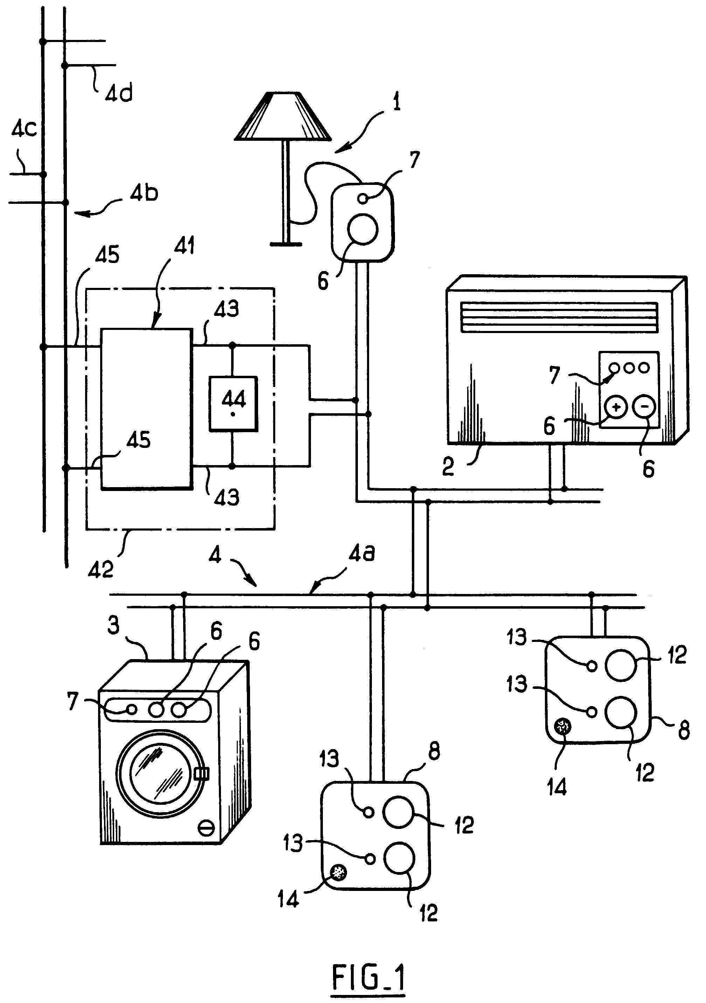

Dans l'exemple représenté à la figure 1, l'installation, volontairement simplifiée, comprend diverses unités d'action, à savoir un lampadaire 1, un convecteur de chauffage 2, et une machine à laver 3, qui sont reliées les unes aux autres par une partie privative 4a d'un réseau filaire de communication bidirectionnelle 4 à travers lequel elles peuvent échanger des messages d'état provenant des unités d'action 1 à 3 et des messages de commande destinés aux unités d'action 1 à 3. Les unités d'action 1 à 3 comprennent un ou plusieurs boutons de réglage 6 offrant au minimum deux états de fonctionnement, par exemple "marche" et "arrêt", et un ou plusieurs voyants lumineux ou autres indicateurs 7.

Dans l'exemple, le réseau 4 est constitué par le réseau bifilaire d'alimentation électrique, auquel cas les messages sont élaborés de manière concrète selon la technique des courants porteurs. Le réseau 4 pourrait également être constitué par un autre moyen filaire, par exemple un câble dédié, des fibres optiques etc.

Deux unités de commande 8 sont également reliées au réseau 4 pour recevoir les messages d'état de la part des unités d'action 1 à 3, et leur adresser des messages de commande et des messages de demande d'état.

Les unités de commande 8 représentées comprennent deux boutons de télécommande 12 à chacun desquels est associé un voyant de signalisation 13. Elles comprennent aussi une commande manuelle de demande de mise en correspondance 14.

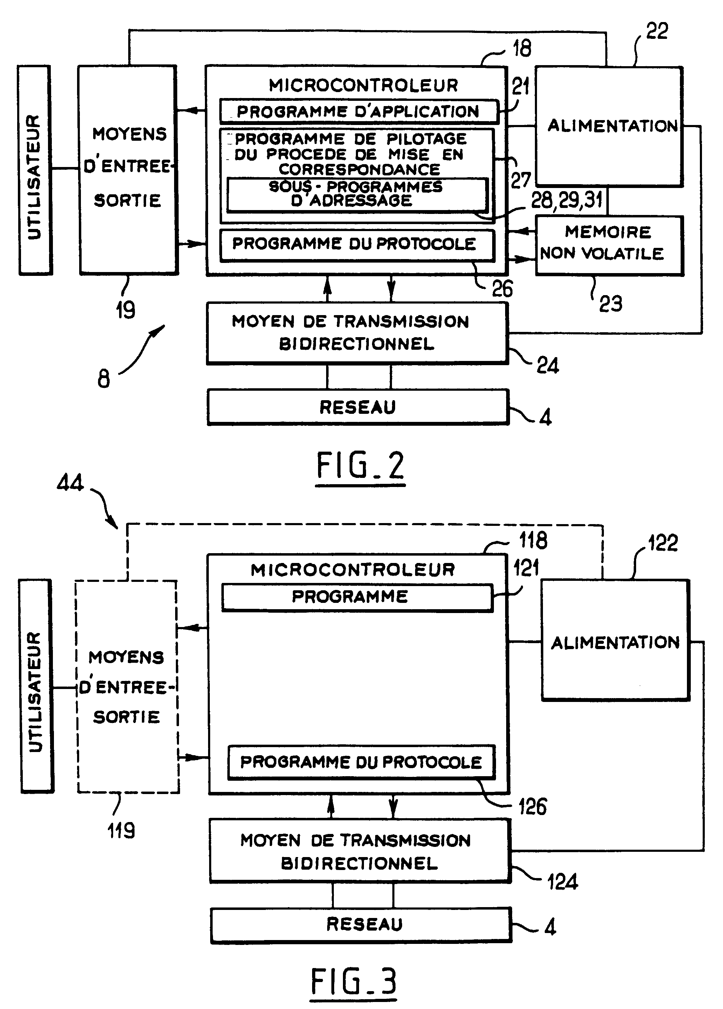

Comme représenté à la figure 2, chaque unité fonctionnelle de commande ou d'action comporte un micro-contrôleur 18 relié à des moyens d'entrée/sortie 19 qui font l'interface avec l'utilisateur. En pratique, ces moyens d'entrée/sortie sont constitués par les boutons 6 et les voyants lumineux 7 des unités d'action, ou 12 à 14 des unités de commande, et aussi par les actionneurs des unités d'action, qui fournissent à l'utilisateur l'action attendue, par exemple éclairage, chauffage etc.

En fonction des commandes effectuées sur les boutons 6, 12, 14 et le cas échéant des signaux reçus de capteurs, un programme d'application 21 prévu dans le micro-contrôleur gère l'action des voyants lumineux 7, 13 et, lorsqu'il s'agit d'unités d'action, des actionneurs (lampes, moteurs, résistances chauffantes, relais etc) faisant partie des moyens d'entrée/sortie. Le micro-contrôleur 18 est aussi relié au réseau 4 par l'intermédiaire d'un moyen de transmission bidirectionnelle 24, par exemple un modem capable de transformer en messages du type courants porteurs les informations reçues du micro-contrôleur 18, et inversement de transformer en signaux acceptables par le micro-contrôleur 18 et les messages du type courants porteurs provenant du réseau 4.

Le micro-contrôleur 18 renferme encore un programme de pilotage du procédé de mise en correspondance 27, comprenant des sous-programmes d'adressage 28, 29, 31.

Il est aussi prévu dans le micro-contrôleur 18 un programme de protocole 26 qui gère les échanges d'informations entre le moyens d'entrée/sortie et la mémoire non-volatile.

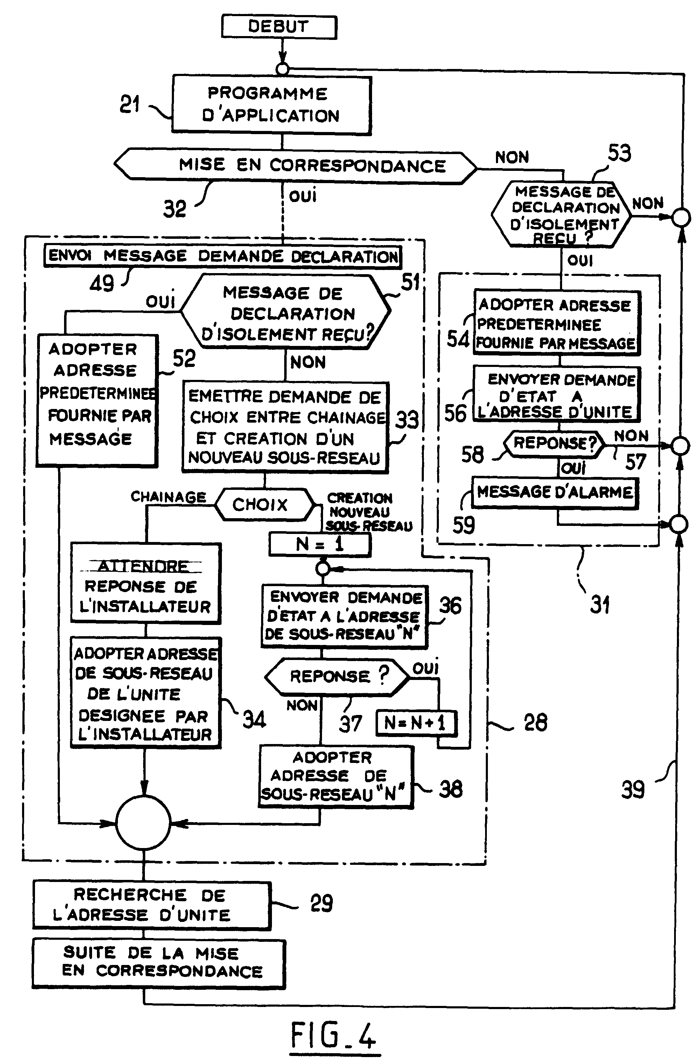

On va maintenir décrire en référence à la figure 4 certains éléments de la programmation du micro-contrôleur 18 d'une unité fonctionnelle de commande 8.

Le programme d'application 21, exécuté cycliquement, passe par un test 32 pour déterminer si un installateur 1 a actionné le bouton 14 de la figure 1. Dans ce cas, s'engage un processus de mise en correspondance dont des exemples sont donnés dans le FR-A-2670590 pour permettre à l'installateur d'établir une relation ou "mise en correpsondance" entre chaque bouton de télécommande 12 de l'unité fonctionnelle de commande et une unité fonctionnelle d'action respective correspondante, de façon qu'une fois la mise en correspondance effectuée, l'actionnement d'un bouton 12 déterminé provoque une modification déterminée du fonctionnement de l'une des unités fonctionnelles d'action 1, 2 ou 3.

Dans le cadre du procédé de mise en correspondance, se trouve un sous-programme de recherche d'adresse de sous-réseau 28. Il s'agit de donner à l'unité fonctionnelle de commande une adresse de sous-réseau qui ensuite, lors du fonctionnement normal en utilisation, accompagnera tous les messages émanant de l'unité fonctionnelle de commande de façon que ces messages ne soient pris en compte que par les unités fonctionnelles ayant la même adresse de sous-réseau. Autrement dit, les adresses de sous-réseau consituent un moyen logiciel de définir des sous-réseaux indépendants les uns des autres à l'intérieur du réseau.

Le sous-programme 28 comprend une étape 33 par laquelle il est demandé à l'installateur de choisir entre un chaînage et une création de nouveau sous-réseau. Le chaînage signifie que l'on va donner automatiquement à l'unité fonctionnelle d'action la même adresse de sous-réseau qu'une autre unité fonctionnelle de manière que l'unité fonctionnelle d'action appartienne au même sous-réseau que cette autre unité fonctionnelle. En pratique, cette demande de choix peut se présenter à l'installateur sous la forme d'un clignotement des voyants 13 de l'unité fonctionnelle et des voyants appartenant à d'autres unités fonctionnelles ayant déjà une adresse de sous-réseau. Pour choisir la création d'un nouveau sous-réseau, l'installateur appuie sur le bouton 12 qui est en train de faire l'objet de la mise en correspondance. Pour réaliser un chaînage, l'installateur appuie sur un bouton 6 ou 12 de l'unité fonctionnelle avec laquelle il désire réaliser le chaînage.

De manière non représentée, le procédé de mise en correspondance comprend des étapes permettant, lorsque l'unité fonctionnelle ayant déjà une adresse de sous-réseau perçoit à travers le réseau un message 33, en provenance d'une autre unité fonctionnelle, de gérer le clignotement des voyants, l'envoi d'un message de choix de chaînage lorsque l'installateur presse une commande telle que 6 ou 12 de l'unité fonctionnelle considérée pour définir le chaînage à réaliser, et l'interruption du clignotement une fois que l'installateur a fait son choix.

Lorsque l'installateur choisit le chaînage, le message envoyé par l'unité fonctionnelle choisie comporte l'adresse de sous-réseau de cette unité fonctionnelle et, par une étape 34, l'unité fontionnelle de commande adopte l'adresse de sous-réseau qu'elle reçoit ainsi.

Si l'installateur opte pour la création d'un nouveau sous-réseau, les adresses de sous-réseau possibles sont explorées systématiquement de manière à adopter la première disponible. Pour cela, par une étape 36, on envoie systématiquement à chaque adresse de sous-réseau "N" une demande d'état. Si l'on reçoit une réponse (test 37), c'est que l'adresse de sous-réseau est déjà attribuée, et on passe à l'adresse de sous-réseau suivante pour recommencer l'opération 36.

En l'absence de réponse, on adopte l'adresse de sous-réseau (étape 38).

Lorsque l'adresse de sous-réseau a été déterminée, on passe à la recherche d'une adresse d'unité disponible, par le sous-programme 29, en recherchant une adresse disponible d'une manière qui ressemble à celle qui vient d'être décrite en référence aux étapes 36, 37 et 38 correspondant à la recherche d'une nouvelle adresse de sous-réseau, excepté que cette fois chaque envoi de demande d'état similaire à l'étape 36 peut comporter, en plus de l'adresse d'unité à tester, l'adresse de sous-réseau déjà déterminée. On peut en effet, au moins dans certains cas, se contenter d'une adresse d'unité qui ne soit disponible que dans le sous-réseau, et non nécessairement dans l'ensemble du réseau.

Ensuite, le procédé de mise en correspondance est mené jusqu'à son terme, puis l'on revient au programme d'application par une boucle de retour 39.

Le procédé qui vient d'être décrit pour définir l'adresse de sous-réseau est susceptible de perturber des installations voisines. Par exemple, l'étape consistant à faire clignoter tous les voyants d'unités fonctionnellles déjà adressées pour que l'installateur puisse opter entre le chaînage et la création d'un nouveau sous-réseau va, si aucune précaution n'est prise, perturber une éventuelle installation voisine de même type, qui ne devrait pas être concernée par le processus de mise en correspondance et d'adressage qui est en cours.

Pour éviter cela, comme le montre la figure 1, on place entre la partie privative 4a du réseau 4 et la partie publique 4b du même réseau, un filtre 41 qui, tout en permettant le passage du courant de puissance entre ses entrées 43 reliées à la partie privative 4a et ses entrées 45 reliées à la partie publique 4b, assure une isolation entre les entrées 43 et 45 à l'égard des signaux de communication entre unités. Ainsi, le filtre 41 empêche les communications provenant de la partie privative 4a de passer dans la partie publique 4b et de là dans d'autres parties privatives 4c et 4d, et empêche également les communications qui pourraient circuler dans la partie publique 4b de venir perturber la partie privative 4a.

En outre, si l'installateur en train de configurer la partie privative 4a ne souhaite pas subdiviser la partie 4a en plusieurs sous-réseaux, les adresses de sous-réseau n'ont plus d'utilité dans la partie 4a, il suffit simplement que toutes les unités reliées à la partie 4a aient la même adresse de sous-réseau, qui peut être choisie quelconque puisque les risques d'interférence avec d'autres installations sont empêchés par le filtre 41 placé à la seule jonction existante entre la partie privative 4a et le reste du réseau 4.

Dans ces conditions, toutes les étapes qu'on a décrites précédemment pour définir une adresse de sous-réseau convenable apparaîtraient à l'installateur comme fastidieuses et inutiles.

Pour remédier à cela, le filtre 41 que l'on a monté dans l'installation de la figure 1 appartient à un dispositif de filtrage et déclaration d'isolement 42 qui comprend en outre, entre les entrées 43 du filtre qui sont raccordées à la partie 4a du réseau 4, un dispositif de déclaration d'isolement 44 qui a pour fonction d'informer la partie 4a, formant sous-réseau, qu'elle est isolée du reste du réseau 4.

Comme le montre la figure 3, le schéma-bloc du dispositif de déclaration d'isolement 44 ne diffère de celui de l'unité de commande 8 que par le programme 121 stocké dans le micro-contrôleur 118, et par le fait que les moyens d'entrée/sortie 119 et la mémoire non volatile ne sont plus qu'optionnels.

Par ailleurs, le schéma est identique à celui de la figure 2, les références numériques des éléments correspondants étant augmentées de 100.

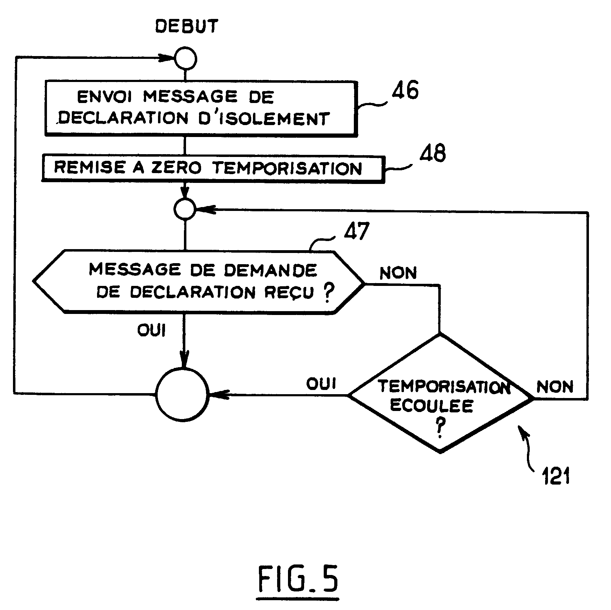

On va décrire en référence à la figure 5 le programme 121 du dispositif de déclaration d'isolement 44.

Ce programme débute, lors du premier branchement du dispositif 42 de filtrage et déclaration d'isolement, par une étape 46 d'envoi d'un message de déclaration d'isolement, comprenant une adresse de sous-réseau, qui peut par exemple être systématiquement l'adresse "01", c'est à dire la première adresse possible dans un champ d'adresses allant de "01" à "99".

Ensuite, une temporisation 48 est remise à zéro puis un test 47 recheche si un message de demande de déclaration a été reçu. Si oui, on retourne à l'étape 46 d'envoi du message de déclaration d'isolement, et on remet encore à zéro la temporisation (étape 48).

Si non, et si la temporisation n'est pas écoulée, on revient au test 47. Si la temporisation est écoulée, on retourne à l'étape 46 d'envoi du message de déclaration d'isolement et à l'étape 48 de remise à zéro de la temporisation.

Par conséquent, le dispositif de déclaration d'isolement 44 émet un message de déclaration dès qu'il est mis en service, puis de manière cyclique chaque fois que la temporisation est écoulée, et aussi à chaque interrogation en ce sens arrivant à travers le sous-réseau 4a.

Revenant à la figure 4, le sous-programme 28 de recherche d'adresse de sous-réseau est conçu pour exploiter le cas échéant la présence du dispositif de déclaration d'isolement 44.

Pour cela, l'étape 33 consistant à émettre une demande de choix entre chaînage et création d'un nouveau sous-réseau est précédé par une étape 49 d'envoi d'un message de demande de déclaration. Ce message va donc être détecté par le test 47 du programme 121 du dispositif de déclaration d'isolement 44, ce qui va provoquer l'envoi d'un message de déclaration d'isolement selon l'étape 46 du même programme 121. Et ce message de déclaration d'isolement est détecté par un test 51 du sous-programme 28 de la figure 4. Dans ce cas, le test 51 provoque l'exécution d'une étape 52 consistant à adopter l'adresse prédéterminée fournie par le message de déclaration d'isolement reçu du dispositif 44. L'étape 52 conduit directement au sous-programme 29 de recherche d'adresse d'unité en contournant à la fois le processus de chaînage et le processus de création d'un nouveau sous-réseau (étapes 34, 36, 37, 38).

En outre, si la réponse au test 32 détectant l'actionnement du bouton 14 est négative, un autre test 53 est effectué pour déterminer si un message de déclaration d'isolement est reçu. Il s'agit de savoir si l'on a reçu le message envoyé par l'étape 46 de la figure 5 soit au début du programme 121 soit à cause de l'écoulement de la temporisation prévue dans le programme 121 du dispositif de déclaration d'isolement 44. Si la réponse est négative on revient à la boucle 39 de reprise du programme d'application. Si la réponse au test 53 est positive, un sous-programme 31 de réadressage est initié. Il consiste, par une étape 54, à adopter l'adresse de sous-réseau prédéterminée fournie par le message de déclaration d'isolement reçu.

Ainsi, dans le cas par exemple où l'on installerait le dispositif de filtrage et déclaration d'isolement 42 à l'entrée d'un sous-réseau 4a qui a déjà été configuré, toutes les unités fonctionnelles impliquées dans la configuration existante vont remplacer leur adresse de sous-réseau par celle fournie par le message émanant du dispositif de déclaration d'isolement 44.

En principe, l'installateur qui ajoute le dispositif de filtrage et déclaration d'isolement 42 sait qu'il peut le faire, c'est à dire qu'il n'a pas antérieurement créé plusieurs sous-réseaux dans la partie privative 4a. Toutefois, le sous-programme 31 comporte une étape 56 par laquelle on envoie une demande d'état à l'adresse d'unité. S'il n'y a pas de réponse (sortie 57) au test d'attente de réponse 58, c'est que l'adresse d'unité est toujours disponible, et on rejoint la boucle 39 de retour au programme d'application. Si au contraire il y a réponse à la demande d'état c'est que probablement plusieurs sous-réseaux avaient été créés en aval du filtre nouvellement installé, de sorte que maintenant plusieurs unités on la même adresse d'unité, et un message d'alarme 59 est émis, pour appeler à effectuer à nouveau la mise en correspondance.

Dans une installation telle que décrite, c'est à dire où chaque mise en correspondance commence par une unité fonctionnelle de commande à laquelle on va attribuer une adresse de sous-réseau puis désigner l'unité fonctionnelle d'action qui doit lui obéir, l'unité fonctionnelle d'action comporte à la place du sous-programme 28 de la figure 4 une simple étape d'adoption de l'adresse de sous-réseau de l'unité fonctionnelle de commande à laquelle elle devra obéir. Par contre, le sous-programme 31 est d'une manière générale les autres éléments de la figure 4 demeurent.

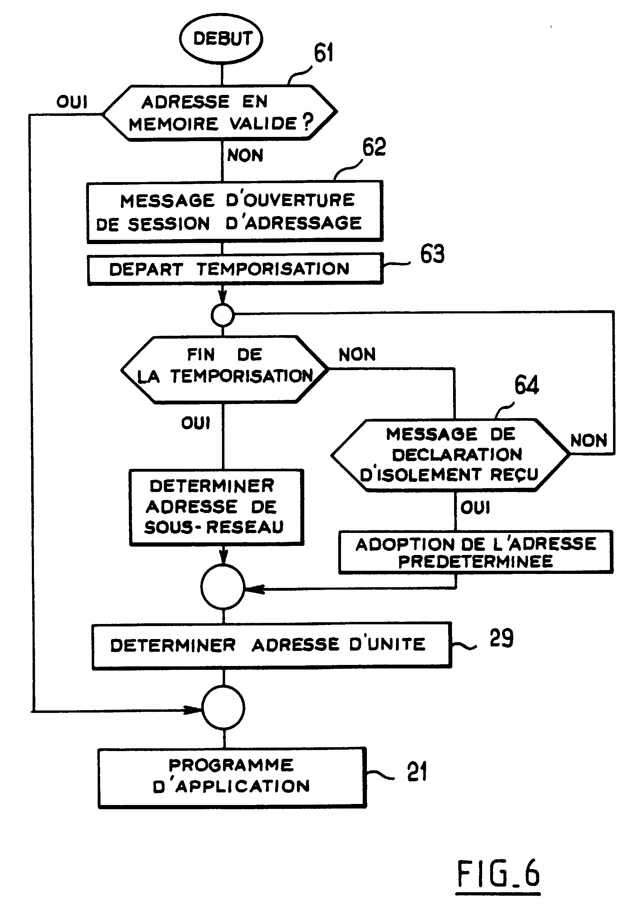

Dans l'exemple représenté à la figure 6, l'organigramme de l'unité fonctionnelle comprend un test 61 qui est effectué à chaque mise sous tension pour déterminer si l'adresse en mémoire est valide ou non. L'adresse est considérée comme non valide si elle correspond à une adresse d'initialisation mise en mémoire en usine. Elle est considérée comme valide si elle correspond, sans anomalie, à une adresse susceptible d'être utilisée en exploitation dans l'installation. Si l'adresse est valide, l'organigramme passe directement au programme d'application 21.

Si au contraire l'adresse est non valide, un message d'ouverture de session d'adressage 62 est émis. Ce message est destiné aussi bien aux autres unités susceptibles de chaînage qu'à un éventuel dispositif de déclaration d'isolement. Une temporisation 63 est initiée pendant laquelle, par un test 64, on surveille la réception d'un message de déclaration d'isolement.

De manière non représentée, les autres unités fonctionnelles qui ont reçu le message d'ouverture de session d'adressage observent la même temporisation et attendent de la même manière le message de déclaration d'isolement. Ainsi, si celui-ci est reçu, les autres unités fonctionnelles savent que la procédure d'adressage de sous-réseau va s'interrompre et que par conséquent elles n'auront pas à participer à une procédure de chaînage. Elles retournent donc à leur programme d'application. Si au contraire la temporisation arrive à son terme sans qu'un message de déclaration d'isolement soit détecté, les autres unités fonctionnelles restent dans l'attente d'une éventuelle procédure de chaînage du genre décrit en référence à la figure 4.

Revenant à l'organigramme représenté à la figure 6, si l'unité ayant lancé la session d'adressage détecte un message de déclaration d'isolement, elle adopte l'adresse prédéterminée fournie par le message de déclaration d'isolement, qui équivaut en quelque sorte à un message de chaînage prioritaire et automatique.

Si la temporisation arrive à son terme sans qu'un message de déclaration d'isolement ait été détecté, l'unité ayant lancé la session détermine une adresse de sous-réseau cohérente, soit par chaînage soit par création d'un nouveau sous-réseau, sensiblement comme décrit en référence à la figure 4.

Ensuite, que l'adresse de sous-réseau adoptée soit l'adresse prédéterminée ou une adresse déterminée autrement, vient l'étape de recherche de l'adresse d'unité 29, comme décrit en référence à la figure 4, puis on retourne au programme d'application 21.

Ainsi, à chaque mise sous tension, l'unité fonctionnelle reliée à une partie de réseau isolée et munie du dispositif de déclaration d'isolement procède à une installation automatique, c'est à dire détermine elle-même sans auncune intervention humaine son adresse de sous-réseau et son adresse d'unité.

Au lieu d'intervenir à la mise sous tension, le processus qui vient d'être décrit pourrait également intervenir au début d'un processus de mise en correspondance comme cela est décrit en référence à la figure 4.

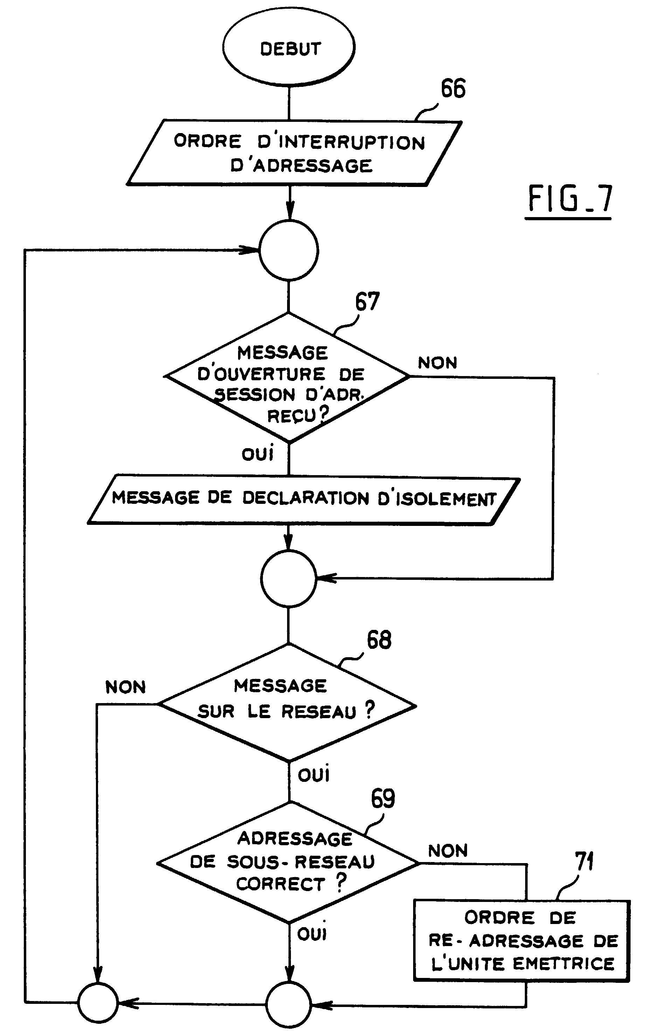

Dans l'exemple représenté à la figure 7, l'organigramme du dispositif de déclaration d'isolement comprend, dès la mise sous tension, un ordre d'interruption d'adressage 66. En effet, la mise sous tension du dispositif de déclaration d'isolement est synonyme de mise sous tension de l'ensemble de la partie de réseau isolée. Ceci signifie que de nombreuses unités fonctionnelles vont être également mises sous tension au même moment et, d'après l'organigramme de la figure 6, vont commencer en même temps une session d'adressage nécessitant des échanges de message sur le réseau. Il en résulterait de multiples collisions et répétitions de messages endommagés ou interrompus. Le but de l'ordre d'interruption d'adressage 66 est de mettre fin à ce désordre et d'obliger l'utilisateur à intervenir sur les différentes unités qui le nécessitent, par exemple au moyen de sessions de mises en correspondance.

Ensuite, un test 67 détermine si un message d'ouverture de session d'adressage a été reçu. Si oui, un message de déclaration d'isolement est émis, pour être détecté par le test 64 de la figure 6. Après cela, ou en l'absence de message d'ouverture de session d'adressage, un test 68 détecte les éventuels messages sur le réseau, quels qu'ils soient. En l'absence de message, on retourne au test 67.

Au contraire, chaque fois qu'un message est détecté sur le réseau, un test 69 vérifie si l'adressage de sous-réseau de ce message est correct, c'est à dire s'il correspond à l'adressage de sous-réseau prédéterminé qu'impose normalement le dispositif de déclaration d'isolement. Si l'adressage de sous-réseau est correct, l'organigramme renvoie au test 67.

Dans le cas contraire, par exemple s'il s'agit d'un message émis par une unité fonctionnelle dite "nomade", telle qu'un aspirateur que l'on ne raccorde que de temps en temps au réseau et dont le dernier raccordement peut dater d'une époque antérieure à l'installation du dispositif de déclaration d'isolement, un ordre 71 est émis sur le réseau pour imposer à cette unité fonctionnelle de procéder à un nouvel adressage adoptant l'adresse de sous-réseau prédéterminée ainsi qu'une adresse d'unité qui soit disponible relativement à cette adresse de sous-réseau prédéterminée.

On peut prévoir, de manière non représentée, que le test 69 permet également de détecter si le message dont l'adressage est incorrect est un message caractéristique d'une mise en correspondance préalable entre l'unité fonctionnelle émettrice du message et une unité fonctionnelle destinataire. Dans l'affirmative, l'ordre de réadressage de l'unité émettrice comporte un ordre d'émission d'un signal incitant l'utilisateur à effectuer une nouvelle mise en correspondance utilisant la nouvelle adresse de l'unité fonctionnelle émettrice. Dans le cas contraire, l'ordre de réadressage 71 déclenche simplement une procédure de réadressage automatique dont l'utilisateur n'a pas besoin d'être informé.

Bien entendu, l'invention n'est pas limitée aux exemples décrits et représentés.

On pourrait prévoir que le dispositif de déclaration d'isolement est séparé du filtre. Ceci permettrait de rajouter un dispositif de déclaration d'isolement à une installation comportant déjà un filtre. Un dispositif de déclaration d'isolement seul serait également utile dans le cas d'un sous-réseau n'ayant aucun lien matériel avec un autre.

Comme évoqué par la présence possible de moyens d'entrée/sortie 119 à la figure 3, le dispositif de déclaration d'isolement pourrait comporter un bouton dont l'actionnement provoquerait l'émission du message de déclaration d'isolement.

Pour simplifier le dispositif de déclaration d'isolement, on pourrait prévoir qu'il consiste en un simple émetteur émettant périodiquement le message de déclaration d'isolement, sans être capable de répondre à une demande d'une tel message. Ceci entraînerait un raccourssicement de la temporisation du programme 121 et par conséquent un plus grand encombrement du sous-réseau de communication.

On pourrait au contraire perfectionner le dispositif de déclaration d'isolement en le rendant capable d'adopter comme adresse de sous-réseau prédéterminée l'adresse de sous-réseau en vigueur dans le sous-réseau si celui-ci a déjà été configuré, et de signaler par une alarme la présence de plusieurs adresses de sous-réseau en aval du filtre. A ce moment là, le dispositif de déclaration d'isolement devra comporter une mémoire non-volatile.

L'adressage prédéterminé pourrait consister en une absence d'adresse de sous-réseau, si par exemple les différentes unités de l'installation sont programmées pour interpréter l'absence d'adresse de sous-réseau comme signifiant que le message doit être pris en compte par toute unité qui le perçoit, sous réserve de l'application des autres critères que le message peut contenir.

## Revendications

1. Procédé pour réaliser un adressage de sous-réseau dans une installation d'unités fonctionnelles (1, 2, 3, 8) communiquant entre elles par un réseau filaire (4), ces unités fonctionnelles étant conçues pour être affectées d'une adresse de sous-réseau permettant de définir, dans le réseau, des sous-réseaux reliant entre elles des unités fonctionnelles capables, d'après les adresses de sous-réseaux, d'ignorer les communications provenant d'unités fonctionnelles rattachées à d'autres sous-réseaux, caractérisé en ce qu'on isole une partie du réseau (4a) de manière à empêcher le passage des communications entre cette partie du réseau (4a) et toute autre partie (4b, 4c, 4d) du réseau (4), en ce qu'on provoque dans la partie de réseau (4a) l'émission d'un message de déclaration d'isolement, et en ce que les unités fonctionnelles (1, 2, 3, 8) reliées à la partie de réseau tiennent compte de ce message pour adopter un adressage de sous-réseau prédéterminé.

2. Procédé selon la revendication 1, caractérisé en ce qu'on fait émettre le message de déclaration par un dispositif de déclaration d'isolement (44) qui émet un premier message dès qu'on le raccorde à la partie de réseau (4a).

3. Procédé selon la revendication 1, caractérisé en ce qu'à la mise sous tension les unités fonctionnelles initient automatiquement une procédure d'adressage au moins si leur adressage préexistant s'avère inopérant, et en ce qu'à la mise sous tension de la partie de réseau, on fait émettre un message d'interruption d'adressage.

4. Procédé selon l'une des revendications 1 à 3, caractérisé en ce qu'on fait émettre le message de déclaration d'isolement de manière cyclique.

5. Procédé selon l'une des revendications 1 à 4, caractérisé en ce qu'on fait émettre le message de déclaration d'isolement sur interrogation de la part des unités fonctionnelles (8).

6. Procédé selon l'une des revendications 1 à 4, caractérisé en ce que les unités fonctionnelles (1, 2, 3, 8), lorsqu'elles reçoivent le message de déclaration d'isolement, remplacent une adresse de sous-réseau préexistante par l'adressage de sous-réseau prédéterminé.

7. Procédé selon l'une des revendications 1 à 6, caractérisé en ce qu'on surveille les adresses de sous-réseau attachées aux messages circulant dans la partie de réseau isolée et on provoque une nouvelle attribution d'adresse pour les unités fonctionnelles dont l'adressage de sous-réseau diffère de l'adressage prédéterminé.

8. Procédé selon l'une quelconque des revendications précédentes, caractérisé en ce qu'on attribue un adressage de sous-réseau à une unité fonctionnelle (1, 2, 3, 8) selon les étapes suivantes :
- attente (51) par l'unité fonctionnelle d'un message de déclaration d'isolement en provenance du réseau ;
- si l'unité fonctionnelle est reliée à une partie de réseau (4a) qui est physiquement isolée du reste (4b, 4c, 4d) du réseau (4) à l'égard des communications entre unités fonctionnelles, émission d'un message de déclaration d'isolement à travers la partie de réseau ;
- en l'absence de message de déclaration d'isolement, détermination (34, 36, 37, 38) de l'adresse de sous-réseau à attribuer à l'unité fonctionnelle, pour que cette adresse soit cohérente avec celle desdites autres unités fonctionnelles ;
- en présence d'un message de déclaration d'isolement, adoption (52) par l'unité fonctionnelle d'un adressage de sous-réseau prédéterminé.

9. Procédé selon la revendication 8, caractérisé en ce qu'avant l'étape d'attente (51), l'unité fonctionnelle effectue une étape de vérification d'une adresse qui lui a été précédemment attribuée, engage l'étape d'attente (51) si l'adresse précédemment attribuée apparaît non valide, et clot la procédure d'adressage si l'adresse précédemment attribuée apparaît valide.

10. Procédé selon l'une des revendications 1 à 9, caractérisé en ce que le message de déclaration d'isolement prescrit l'adressage de sous-réseau prédéterminé.

11. Installation pour la mise en oeuvre du procédé selon l'une des revendications 1 à 10, comprenant des unités fonctionnelles (1, 2, 3, 8) susceptibles de communiquer entre elles via un réseau filaire (4) et organisables en sous-réseaux au moyen d'une adresse de sous-réseau affectée à chaque unité fonctionnelle, caractérisée en ce que l'installation comprend un dispositif de déclaration d'isolement (44) relié au réseau et programmé pour délivrer aux unités fonctionnelles, via le réseau, un message de déclaration d'isolement selon lequel ces unités fonctionnelles appartiennent à un sous-réseau (4a) qui est physiquement isolé du reste (4b, 4c, 4d) du réseau (4), et en ce que les unités fonctionnelles sont programmées (52, 54) pour tenir compte de ce message en adoptant systématiquement une adresse de sous-réseau prédéterminée.

12. Installation selon la revendication 11, caractérisée en ce que le dispositif de déclaration d'isolement (44) est programmé pour envoyer le message (46) de manière spontanée, et les unités fonctionnelles ayant déjà une adresse de sous-réseau sont programmées pour remplacer (54) celle-ci par l'adresse de sous-réseau prédéterminée lorsqu'elles reçoivent le message.

13. Installation selon la revendication 11 ou 12, caractérisée en ce qu'elle comprend en outre, pour réaliser l'isolation physique entre le sous-réseau considéré et le reste du réseau, un filtre (41) destiné à être placé à une jonction entre le sous-réseau considéré (4a) et le reste (4b, 4c, 4d) du réseau, et qui empêche les communications entre le sous-réseau (4a) et le reste (4b, 4c, 4d) du réseau.

14. Installation selon la revendication 13, caractérisée en ce que le filtre (41) et le dispositif de déclaration d'isolement (44) sont agencés en une seule unité (42), le dispositif de déclaration d'isolement (44) étant monté fonctionnellement du côté du sous-réseau (4a) par rapport au filtre.

15. Installation selon l'une des revendications 11 à 14, caractérisée en ce que les unités fonctionnelles sont programmées pour initier, au moins dans certains cas, une procédure d'attribution automatique d'adresse de sous-réseau au moment de leur mise sous tension, et en ce que le dispositif de déclaration d'isolement est programmé pour émettre un ordre d'interruption d'adressage au moment de sa mise sous tension.

16. Installation selon l'une des revendications 11 à 15, caractérisée en ce que le dispositif de déclaration d'isolement est programmé pour émettre le message chaque fois qu'il reçoit une interrogation en ce sens (49) de la part d'une unité fonctionnelle (8).

17. Installation selon l'une des revendications 11 à 16, caractérisée en ce que le dispositif de déclaration d'isolement est programmé pour émettre cycliquement le message de déclaration d'isolement.

18. Installation selon l'une des revendications 11 à 17, caractérisée en ce que le dispositif de déclaration d'isolement comporte une commande manuelle dont l'actionnement provoque l'émission du message.

19. Installation selon l'une des revendications 11 à 18, caractérisée en ce que le dispositif de déclaration d'isolement est programmé pour tester les adressages de sous-réseau des messages qu'il perçoit et pour émettre un ordre suscitant l'attribution d'une nouvelle adresse lorsqu'il détecte un adressage de sous-réseau qui diffère de l'adressage prédéterminé.

20. Installation selon l'une des revendications 11 à 19, caractérisée en ce que le dispositif de déclaration d'isolement est matériellement assemblé à un filtre (41) conçu pour isoler l'une de l'autre deux entrées (43, 45) de ce filtre à l'égard de signaux de communication.

21. Installation selon la revendication 20, caractérisée en ce que le filtre (41) est conçu pour permettre le passage d'un courant de puissance entre les deux entrées, et empêcher le passage de signaux de communication du type "courants porteurs".

22. Unité fonctionnelle pour la mise en oeuvre d'un procédé selon l'une des revendications 1 à 10, ou pour faire partie d'une installation selon l'une des revendications 11 à 21, appartenant à un ensemble d'unités fonctionnelles susceptibles de communiquer entre elles via un réseau filaire et organisables en sous-réseau au moyen d'une adresse de sous-réseau affectée à chaque unité fonctionnelles, caractérisée en ce qu'elle est programmée (51, 53) pour attendre un message de déclaration d'isolement selon lequel cette unité fonctionnelle appartient à un sous-réseau qui est physiquement isolé du reste du réseau, et pour adopter (52, 54) un adressage de sous-réseau prédéterminé en cas de réception d'un tel message.

23. Unité fonctionnelle selon la revendication 22, caractérisée en ce qu'elle est programmée pour engager une procédure (34, 36, 37, 38) de détermination de l'adresse de sous-réseau à adopter en l'absence de message de déclaration d'isolement.

24. Unité fonctionnelle selon l'une des revendications 22 ou 23, caractérisée en ce qu'elle est programmée pour :
- à la mise sous tension, tester son adressage ;
- si celui-ci est inopérant, attendre ledit message de déclaration d'isolement ; et
- si celui-ci est cohérent, passer à un stade de fonctionnement autre que la détermination d'adresse.

## Patentansprüche

1. Verfahren zum Durchführen einer Adressierung in einem Unternetz in einer Anordnung von Funktionseinheiten (1, 2, 3, 8), die untereinander über ein Leitungsnetz (4) kommunizieren, wobei diese Funktionseinheiten so konzipiert sind, daß sie einer Unternetzadresse zugewiesen werden, die es ermöglicht, in dem Netz Unternetze zu definieren, welche jeweils Funktionseinheiten untereinander verbinden, die fähig sind, den Unternetzadressen gemäß, Informationen, die von mit anderen Unternetzen verbundenen Funktionseinheiten stammen, zu ignorieren,
**dadurch gekennzeichnet, daß** man einen Teil des Netzes (4a) isoliert, so daß der Übergang von Informationen zwischen diesem Teil des Netzes (4a) und jedem weiteren Teil (4b, 4c, 4d) des Netzes (4) verhindert wird, und daß man in dem Teil des Netzes (4a) das Aussenden einer Meldung zur Isolierungserklärung hervorruft, und daß die mit dem Teil des Netzes verbundenen Funktionseinheiten (1, 2, 3, 8) diese Meldung berücksichtigen, um eine vorbestimmte Unternetzadressierung anzunehmen.

2. Verfahren nach Anspruch 1,
**dadurch gekennzeichnet, daß** die Erklärungsmeldung von einer Vorrichtung zur Isolierungserklärung (44) ausgesandt wird, die eine erste Meldung abgibt, sobald man sie mit dem Teil des Netzes (4a) verbindet.

3. Verfahren nach Anspruch 1,
**dadurch gekennzeichnet, daß** bei einem unter Spannung setzen die Funktionseinheiten, wenigstens wenn sich ihre bereits vorhandene Adressierung als unwirksam erweist, automatisch ein Verfahren zur Adressierung auslösen, und daß, bei einem unter Spannung setzen des Teil des Netzes eine Meldung zur Unterbrechung der Adressierung ausgesandt wird.

4. Verfahren nach einem der Ansprüche 1 bis 3,
**dadurch gekennzeichnet, daß** die Meldung zur Isolierungserklärung zyklisch ausgesandt wird.

5. Verfahren nach einem der Ansprüche 1 bis 4,
**dadurch gekennzeichnet, daß** die Meldung zur Isolierungserklärung auf Abfrage und in Auftrag der Funktionseinheiten (8) ausgesandt wird.

6. Verfahren nach einem der Ansprüche 1 bis 4,
**dadurch gekennzeichnet, daß** die Funktionseinheiten (1, 2, 3, 8), wenn sie die Meldung zur Isolierungserklärung empfangen, eine bereits vorhandene Unternetzadresse durch eine vorbestimmte Unternetzadressierung ersetzen.

7. Verfahren nach einem der Ansprüche 1 bis 6,
**dadurch gekennzeichnet, daß** die an die in dem isolierten Teil des Netzes umlaufenden Meldungen angehängten Unternetzadressen überwacht werden, und daß eine neue Adressenzuweisung für die Funktionseinheiten, deren Unternetzadressierung sich von der vorbestimmten Adressierung unterscheidet, ausgelöst wird.

8. Verfahren nach einem der vorhergehenden Ansprüche,
**dadurch gekennzeichnet, daß** einer Funktionseinheit (1, 2, 3, 8) eine Unternetzadressierung gemäß den folgenden Schritten zugewiesen wird:
- Warten (51) der Funktionseinheit auf eine aus dem Netz stammende Meldung zur Isolierungserklärung;
- wenn die Funktionseinheit mit einem Teil des Netzes (4a) verbunden ist, der vom Rest (4b, 4c, 4d) des Netzes (4) bezüglich der Kommunkation zwischen den Funktionseinheiten physikalisch getrennt ist, Aussenden einer Meldung zur Isolierungserklärung durch den Teil des Netzes;
- in Abwesenheit der Meldung zur Isolierungserkärung, Bestimmung (34, 36, 37, 38) der der Funktionseinheit zuzuweisende Unternetzadresse, damit diese Adresse zu jener der genannten anderen Funktionseinheiten kohärent ist;
- bei Vorliegen einer Meldung zur Isolierungserklärung, Annehmen (52) einer vorbestimmten Unternetzadressierung durch die Funktionseinheit.

9. Verfahren nach Anspruch 8,
**dadurch gekennzeichnet, daß** die Funktionseinheit, vor dem Schritt Warten (51), einen Schritt zur Verifikation einer ihr vorher zugewiesenen Adresse durchführt, den Schritt Warten (51) einleitet, wenn sich die vorher zugewiesene Adresse als ungültig erweist, und das Adressierungsverfahren beendet, wenn sich die vorher zugewiesene Adresse als gültig erweist.

10. Verfahren nach einem der Ansprüche 1 bis 9,
**dadurch gekennzeichnet, daß** die Meldung zur Isolierungserklärung die vorbestimmte Unternetzadressierung erfordert.

11. Anordnung zum Durchführen des Verfahrens nach einem der Ansprüche 1 bis 10, welche Funktionseinheiten (1, 2, 3, 8) umfaßt, die geeignet sind untereinander über ein Leitungsnetz (4) kommunizieren, und mittels einer, jeder Funktionseinheit zugewiesenen, Untemetzadresse in Unternetze organisierbar sind,
**dadurch gekennzeichnet, daß** die Anordnung eine mit dem Netz verbundene Einrichtung zur Isolierungserklärung (44) aufweist, die programmiert ist, den Funktionseinheiten über das Netz eine Meldung zur Isolierungserklärung zu liefern, gemäß dieser diese Funktionseinheiten zu einem Unternetz (4a) gehören, das vom Rest (4b, 4c, 4d) des Netzes (4) physikalisch isoliert ist, und daß die Funktionseinheiten programmiert sind (52, 54), diese Meldung zu berücksichtigen, indem eine vorbestimmte Unternetzadresse systematisch angenommen wird.

12. Anordnung nach Anspruch 11,
**dadurch gekennzeichnet, daß** die Einrichtung zur Isolierungserklärung (44) programmiert ist, die Meldung (46) spontan zu verschicken, und die Funktionseinheiten, die bereits eine Unternetzadresse aufweisen, programmiert sind, diese durch die vorbestimmte Unternetzadresse zu ersetzen (54), wenn sie die Meldung empfangen.

13. Anordnung nach Anspruch 11 oder 12,
**dadurch gekennzeichnet, daß** sie außerdem, um die physikalische Isolierung zwischen dem betrachteten Unternetz und dem Rest des Netzes zu verwirklichen, einen Filter (41) aufweist, der an eine Verbindungsstelle zwischen dem betrachteten Unternetz (4a) und dem Rest (4b, 4c, 4d) des Netzes gesetzt werden soll, und der die Kommunikation zwischen dem Unternetz (4a) und dem Rest (4b, 4c, 4d) des Netzes verhindert.

14. Anordnung nach Anspruch 13,
**dadurch gekennzeichnet, daß** der Filter (41) und die Einrichtung zur Isolierungserklärung (44) in einer einzigen Einheit (42) angeordnet sind, wobei die Einrichtung zur Isolierungserklärung (44), bezüglich des Filters, zweckmäßig in der Nähe des Unternetzes (4a) angebracht ist.

15. Anordnung nach einem der Ansprüche 11 bis 14,
**dadurch gekennzeichnet, daß** die Funktionseinheiten programmiert sind, wenigstens in bestimmten Fällen, in dem Moment in dem sie unter Spannung gesetzt werden, ein Verfahren zur automatischen Zuweisung einer Unternetzadresse auszulösen, und daß die Einrichtung zur Isolierungserklärung programmiert ist, eine Anweisung zur Unterbrechung der Adressierung, in dem Moment auszusenden, in dem sie unter Spannung gesetzt wird.

16. Anordnung nach einem der Ansprüche 11 bis 15,
**dadurch gekennzeichnet, daß** die Einrichtung zur Isolierungserklärung programmiert ist, die Meldung jedesmal auszusenden, wenn sie eine Unterbrechung in diesem Sinn (49) in Auftrag einer Funktionseinheit (8) empfängt.

17. Anordnung nach einem der Ansprüche 11 bis 16,
**dadurch gekennzeichnet, daß** die Einrichtung zur Isolierungserklärung programmiert ist, die Meldung zur Isolierungserklärun zyklisch auszusenden.

18. Anordnung nach einem der Ansprüche 11 bis 17,
**dadurch gekennzeichnet, daß** die Einrichtung zur Isolierungserklärung eine manuelle Steuerung aufweist deren Betätigung das Aussenden der Meldung auslöst.

19. Anordnung nach einem der Ansprüche 11 bis 18,
**dadurch gekennzeichnet, daß** die Einrichtung zur Isolierungserklärung programmiert ist, die Unternetzadressierungen der Meldungen, die sie empfängt, zu prüfen, und eine Anweisung auszusenden, diedie Zuweisung einer neuen Adresse hervorruft, wenn sie eine Unternetzadressierung ausfindig macht, die sich von der vorbestimmten Adressierung unterscheidet.

20. Anordnung nach einem der Ansprüche 11 bis 19,
**dadurch gekennzeichnet, daß** die Einrichtung zur Isolierungserklärung mit einem Filter (41), der konzipiert ist, die beiden Eingänge (43, 45) dieses Filters bezüglich der Kommunikationssignale voneinander zu isolieren, materiell zusammengefügt ist.

21. Anordnung nach Anspruch 20,
**dadurch gekennzeichnet, daß** der Filter (41) konzipiert ist, den Durchtritt eines Leistungsstroms zwischen den beiden Eingängen zu ermöglichen, und den Durchtritt von Kommunikationssignalen, die von der Art "Trägerströme" sind, zu verhindern.

22. Funktionseinheit für das Durchführen des Verfahrens nach einem der Ansprüche 1 bis 10, oder die Teil einer Anordnung nach einem der Ansprüche 11 bis 21 ist und zu einer Gesamtheit von Funktionseinheiten gehört, die geeignet sind, untereinander über ein Leitungsnetz zu kommunizieren und mittels einer, jeder Funktionseinheit zugewiesenen, Unternetzadresse in Unternetze organisierbar sind,
**dadurch gekennzeichnet, daß** sie programmiert (51, 53) ist, auf eine Meldung zur Isolierungserklärung zu warten, gemäß dieser diese Funktionseinheit zu einem Unternetz gehört, das vom Rest des Netzes physikalisch isoliert ist, und falls eine solche Meldung empfangen wird, eine vorbestimmte Unternetzadressierung anzunehmen (52, 54).

23. Funktionseinheit nach Anspruch 22,
**dadurch gekennzeichnet, daß** sie programmiert ist, ein Verfahren (34, 36, 37, 38) zur Bestimmung der, in Abwesenheit der Meldung zur Isolierungserklärung anzunehmenden Unternetzadresse auszulösen.

24. Funktionseinheit nach einem der Ansprüche 22 oder 23,
**dadurch gekennzeichnet, daß** sie programmiert ist, um:
- ihre Adressierung bei einem unter Spannung setzen, zu prüfen;
- wenn diese unwirksam ist, auf die genannte Meldung zur Isolierungserklärung zu warten; und
wenn diese kohärent ist, in einen Betriebszustand überzugehen, der anders ist, als die Bestimmung der Adresse.

## Claims

1. Method for carrying out sub-network addressing in an installation of functional units (1, 2, 3, 8) communicating with each other via a wire network (4), these functional units being designed to be allocated a sub-network address making it possible to define, in the network, sub-networks linking together functional units which are capable, depending on the sub-network addresses, of ignoring communications originating from functional units attached to other sub-networks, characterised in that a part of the network (4a) is isolated in such a way as to prevent communications passing between this part of the network (4a) and any other part (4b, 4c, 4d) of the network (4), in that, in the part network (4a), an isolation declaration message is caused to be sent, and in that the functional units (1, 2, 3, 8) linked to the part network take account of this message so as to adopt a predetermined sub-network addressing.

2. Method according to Claim 1, characterised in that the declaration message is caused to be sent by an isolation declaration device (44) which sends out a first message as soon as it is connected to the part network (4a).

3. Method according to Claim 1, characterised in that when applying power the functional units automatically initiate an addressing procedure at least if their pre-existing addressing proves to be inoperative, and in that, upon applying power to the part network, an addressing interrupt message is caused to be sent.

4. Method according to any one of Claims 1 to 3, characterised in that the isolation declaration message is caused to be sent cyclically.

5. Method according to one of claims 1 to 4, characterised in that the isolation declaration message is caused to be sent upon interrogation from the functional units (8).

6. Method according to one of Claims 1 to 4, characterised in that the functional units (1, 2, 3, 8), when they receive the isolation declaration message, replace a pre-existing sub-network address with the predetermined sub-network addressing.

7. Method according to one of Claims 1 to 6, characterised in that the sub-network addresses attached to the message flowing in the isolated part network are monitored, and a further address allocation is caused for the functional units the sub-network addressing of which differs from the predetermined addressing.

8. Method according to any one of the preceding claims, characterised in that a sub-network addressing is allocated to a functional unit (1, 2, 3, 8) according to the following stages:
- waiting (51), by the functional unit, for an isolation declaration message originating from the network;
- if the functional unit is linked to a part network (4a) which is physically isolated from the rest (4b, 4c, 4d) of the network (4) in regard to communications between functional units, sending an isolation declaration message across the part network;
- in the absence of an isolation declaration message, determination (34, 36, 37, 38) of the sub-network address to be allocated to the functional unit, so that this address is consistent with that of the said other functional units;
- in the presence of an isolation declaration message, adoption (52) by the functional unit of a predetermined sub-network addressing.

9. Method according to Claim 8, characterised in that, before the waiting stage (51), the functional unit carries out a stage of verification of an address which has previously been allocated to it, enters the waiting stage (51) if the previously allocated address appears to be invalid, and closes the addressing procedure if the previously allocated address appears to be valid.

10. Method according to one of claims 1 to 9, characterised in that the isolation declaration message prescribes the predetermined sub-network addressing.

11. Installation for implementing the method according to one of Claims 1 to 10, comprising functional units (1, 2, 3, 8) capable of communicating with each other via a wire network (4) and of being organised into sub-networks by means of a sub-network address allocated to each functional unit, characterised in that the installation comprises an isolation declaration device (44) linked to the network and programmed to deliver to the functional units, via the network, an isolation declaration message according to which these functional units belong to a sub-network (4a) which is physically isolated from the rest (4b, 4c, 4b) of the network (4) and in that the functional units are programmed (52, 54) to take account of this message by systematically adopting a predetermined sub-network address.

12. Installation according to Claim 11, characterised in that the isolation declaration device (44) is programmed to send the message (46) spontaneously, and the functional units already having a sub-network address are programmed to replace (54) it with the predetermined sub-network address when they receive the message.

13. Installation according to Claim 11 or 12, characterised in that it further comprises, for implementing the physical isolation between the sub-network in question and the rest of the network, a filter (41) intended to be placed at a junction between the sub-network in question (4a) and the rest (4b, 4c, 4b) of the network, and which prevents communication between the sub-network (4a) and the rest (4b, 4c, 4b) of the network.

14. Installation according to Claim 13, characterised in that the filter (41) and the isolation declaration device (44) are arranged in a single unit (42), the isolation declaration device (44) being fitted functionally on the sub-network (48) side with respect to the filter.

15. Installation according to one of Claims 11 to 14, characterised in that the functional units are programmed, at least in certain cases, to initiate an automatic sub-network address allocation process at the moment when power is applied, and in that the isolation declaration device is programmed to send out an addressing interrupt command at the moment when power is applied to it.

16. Installation according to one of Claims 11 to 15, characterised in that the isolation declaration device is programmed to send the message every time it receives an interrogation in this direction from a functional unit (8).

17. Installation according to one of Claims 11 to 16, characterised in that the isolation declaration device is programmed to send the isolation declaration message cyclically.

18. Installation according to one of Claims at 11-17, characterised in that the isolation declaration device includes a manual control actuation of which causes the message to be sent.

19. Installation according to one of Claims 11 to 18, characterised in that the isolation declaration device is programmed to test the sub-network addresses of the messages which it perceives and to send a command invoking the allocation of a new address when it detects a sub-network addressing which differs from the predetermined addressing.

20. Installation according to one of Claims 11 to 19, characterised in that the isolation declaration device is physically assembled to a filter (41) designed to isolate the two inputs (43, 45) of this filter from one another with regard to communications signals.

21. Installation according to Claim 20, characterised in that the filter (41) is designed to allow power current to pass between the two inputs, but to prevent the passage of communications signals of the "carrier currents" type.

22. Functional unit for implementing a method according to one of Claims 1 to 10, or for forming part of the installation according to one of Claims 11 to 21, belonging to a set of functional units capable of communicating with each other via a wire-type network and of being organised into a sub-network by means of a sub-network address allocated to each functional unit, characterised in that it is programmed (51, 53) to wait for an isolation declaration message, according to which this functional unit belongs to a sub-network which is physically isolated from the rest of the network, and to adopt (52, 54) a predetermined sub-network addressing in the event of such a message being received.

23. Functional unit according to Claim 22, characterised in that it is programmed to undertake a procedure (34, 36, 37, 38) of determining the sub-network address to be adopted in the absence of an isolation declaration message.

24. Functional unit according to one of Claims 22 and 23, characterised in that it is programmed to:
- upon power being applied, test its addressing;
- if the latter is inoperative, await the said isolation declaration message; and
- if this is consistent, move on to an operating stage other than the address determination.
